# EUROPÄISCHE PATENTANMELDUNG

(11) **EP 2 366 911 A1**
(43) Veröffentlichungstag der Anmeldung: **21.09.2011**
(21) Anmeldenummer: 11154757.6
(22) Anmeldetag: 17.02.2011
(51) Int. Cl.: F16C 13/00, F16C 32/06, D21G 1/02

(54) **Walze für eine Papier- oder Kartonmaschine und Verfahren zum Dämpfen von Schwingungen einer Walze**

(30) Priorität: 02.03.2010 DE 102010002503
(71) Anmelder: Voith Patent GmbH, 89520 Heidenheim (DE)
(72) Erfinder: Niemann, Jochen, 47804, Krefeld (DE)

(57) **Zusammenfassung**

Die Erfindung betrifft eine Walze für eine Papier- oder Kartonmaschine mit einem umlaufenden Walzenmantel (2) und einem feststehenden Joch (1). Der Walzenmantel (2) wir durch den Druck in mindestens einer Druckkammer (8) radial nach außen belastet. Die Druckkammer (8) ist über eine Drosselstelle (11) mit einer Druckmittelleitung (12) verbunden.

Um eine Schwingungsdämpfung über einen großen Frequenzbereich und insbesondere auch bei hohen Frequenzen zu erreichen, ist die Druckkammer 8 über mindestens einen Kanal (13) mit einem Druckraum (14, 15) verbunden, der ein veränderbares Volumen aufweist. Dabei erfolgt eine Dimensionierung der Druckräume (14, 15), der Kanäle (13), der Drosselstelle (11) und der Kammern (17, 18) in Abhängigkeit von mindestens einer Schwingfrequenz des Walzenmantels (2).

## Beschreibung

Die Erfindung betrifft eine Walze, insbesondere für eine Papier- oder Kartonmaschine, mit einem umlaufenden Walzenmantel und einem feststehenden Joch, das den Walzenmantel axial durchsetzt, wobei der Walzenmantel durch den Druck in mindestens einer Druckkammer radial nach außen belastbar ist und die Druckkammer über eine Drosselstelle mit einer Druckmittelleitung verbunden ist. Ferner betrifft die Erfindung ein Verfahren zum Dämpfen von Schwingungen einer derartigen Walze.

Derartige Walzen werden als Biegeausgleichswalzen, als schwimmende Walzen oder als Schuhwalzen zur Bildung eines Nips mit einer Gegenwalze eingesetzt. Durch den Nip wird eine faserförmige Materialbahn, in der Regel eine Papier- oder Kartonbahn geführt und im Nip mit erhöhtem Druck und gegebenenfalls erhöhter Temperatur beaufschlagt.

Die Walze und insbesondere der Walzenmantel wird im Betrieb beispielsweise durch Inhomogenitäten, Anisotropien oder Geometriefehlern, aber auch durch Papierdickenschwankungen mit Erregerkräften beaufschlagt, die ein Schwingen des Walzenmantels bewirken. Die resultierende Schwingbewegung ist in der Regel so klein, dass sie nicht unmittelbar stört. Allerdings prägen sich diese Schwingungsbewegungen nach einem längeren Zeitraum in den Walzenmantel ein, was zu einer weiteren Schwingungsverstärkung führt. Dies macht sich zum einen als akustische Schwingungen bemerkbar, also in einem erhöhten Schallpegel, kann aber auch zu periodischen Dickenschwankungen der Materialbahn führen, der so genannten Barring-Erscheinung.

Die Schwingung des Walzenmantels wird entweder direkt oder durch ein Stützelement auf ein in der Druckkammer angeordnetes Druckmittel übertragen, das dadurch über die Drosselstelle hin- und hergeschoben wird. Dabei wird in der Drosselstelle durch Reibung dem System Schwingungsenergie entzogen, so dass eine Dämpfung der Schwingung erfolgt. Die Drosselstelle muss dabei so ausgelegt sein, dass genügend Öl über die Drosselstelle pulsieren kann.

Um eine Rückkopplung auf die Druckmittelleitung zu vermindern, ist in EP 1 731 668 A1 eine Biegeausgleichswalze vorgeschlagen worden, bei der die Druckkammer über Drosselstellen zunächst mit einem Druckraum verbunden ist, wobei der Druckraum über eine Drosselstelle an einer Druckmittelleitung angeschlossen ist. Zwischen der Druckmittelleitung und der Druckkammer ist also in Reihe ein Druckraum angeordnet, der eine Isolierung der Druckmittelleitung bewirkt. Dabei kann der Druckraum eine teilweise elastische Begrenzungswand aufweisen, durch deren elastische Verformung eine weitere Schwingungsdämpfung erreicht wird.

In DE 10 2007 051 395 A1 ist vorgeschlagen, die Druckkammer einer Durchbiegungseinstellwalze mit Hilfe einer Membran in zwei Kammern aufzuteilen, wobei die einem Stützelement zugewandte Druckkammer über eine Drosselstelle mit einer Druckmittelleitung verbunden ist und die durch die elastische Wand von der Druckkammer abgetrennte Kammer mit einem kompressiblen Medium gefüllt ist. Das kompressible Medium, beispielsweise ein Gas, kann dabei über eine Anschlussleitung in die Kammer eingebracht werden. Bei dieser Lösung erfolgt zum einen eine Schwingungsdämpfung über die Hin-und Herbewegung des Druckmittels über die Drosselstelle und zum anderen durch die Bewegung der elastischen Wand, die die Druckkammer teilweise begrenzt.

Bei relativ niedrigen Frequenzen und relativ großen Schwingungsamplituden arbeiten diese Lösungen zufrieden stellend. Bei hohen Frequenzen von beispielsweise 150 bis 1000 Hz wird die Dämpferleistung jedoch relativ klein, was möglicherweise durch eine Phasenverschiebung der Schwingungen über der Drosselstelle hervorgerufen wird.

Der Erfindung liegt daher die Aufgabe zugrunde, auch bei hohen Frequenzen eine gute Schwingungsdämpfung zu erreichen.

Erfindungsgemäß wird diese Aufgabe bei einer Walze der eingangs genannten Art dadurch gelöst, dass die Druckkammer über mindestens einen Kanal mit mindestens einem Druckraum verbunden ist, der ein veränderbares Volumen aufweist.

Bei dieser Lösung kann die durch die Schwingungen des Walzenmantels bewegte Hydraulikflüssigkeit nicht nur über die Drosselstelle hin- und hergeschoben werden, sondern auch über den mindestens einen Kanal in mindestens einen Druckraum, dessen Volumen sich durch die entsprechenden Druckschwankungen verändert. Die Kanäle wie auch die Drosselstelle gehen dabei direkt von der Druckkammer ab. Dabei wird eine mehrfache Schwingungsdämpfung parallel erreicht. So erfolgt eine erste Schwingungsdämpfung durch die Hin- und Herbewegung der Hydraulikflüssigkeit über der Drosselstelle, eine zweite Dämpfung durch die Hin-und Herbewegung der Hydraulikflüssigkeit durch die Kanäle und eine dritte Dämpfung durch die Veränderung des Volumens des Druckraums, also einer elastischen Verformung. Insgesamt wird dadurch eine sehr effektive Schwingungsdämpfung erreicht, wobei durch die verschiedenen Dämpfungsmechanismen auch bei hohen Frequenzen eine gute Schwingungsdämpfung gewährleistet ist. Dadurch wird das Auftreten von Barring vermindert und eine Standzeit der Walze verlängert.

Dabei ist besonders bevorzugt, dass die Druckkammer im Joch angeordnet ist, wobei in der Druckkammer ein Stützelement geführt ist, das durch einen Druck in der Druckkammer mit einer Anlegeseite gegen den Walzenmantel drückbar ist. Das Stützelement ist dabei in der Regel radial in der Druckkammer führbar und begrenzt eine Seite der Druckkammer. Dabei kann zwischen dem Stützelement und einer Umfangsfläche der Druckkammer eine Dichtung angeordnet sein. Das Stützelement bildet eine Seite der Druckkammer. An der Anlegeseite des Stützelements können Ölkammern ausgebildet sein, die zum Ausbilden eines Ölfilms zwischen der Anlegeseite des Stützelements und einer Innenseite des Walzenmantels dienen. Dieser Ölfilm kann beispielsweise 20 bis 50 µm dick sein und ist sehr steif, so dass darüber nahezu keine Schwingungsdämpfung erfolgt. Die Schwingungen des Walzenmantels werden also direkt auf das Stützelement übertragen, das entsprechend mit dem Walzenmantel innerhalb der Druckkammer schwingt und so die Schwingung auf das in der Druckkammer angeordnete Druckmedium überträgt. Das Stützelement kann als Schuh einer Schuhwalze ausgebildet sein, es können aber auch mehrere Stützelemente in entsprechend vielen Druckkammern axial nebeneinander angeordnet sein, so dass eine Durchbiegungsausgleichswalze erhalten wird. Durch die Anordnung der Druckkammer im Joch kann diese nach außen relativ gut abgedichtet werden. Dabei steht innerhalb des Jochs ohnehin ausreichend Platz zur Verfügung. Die Druckmittelleitung kann dabei beispielsweise axial durch das Joch geführt sein.

Dabei ist besonders bevorzugt, dass die Druckkammer, der Kanal und der Druckraum in einem Einsatz ausgebildet sind, der in einer Ausnehmung im Joch angeordnet ist. Der Einsatz kann dann beispielsweise aus einem anderen Material hergestellt sein als das Joch. Dabei ist ein Einsatz auch leichter handhabbar als das gesamte Joch, so dass insgesamt die Ausbildung der Druckkammer, des Kanals und des Druckraums einfacher erfolgen kann. Gleichzeitig können beispielsweise bestehende Walzen, die ein Joch mit einer Druckkammer aufweisen, durch die Verwendung des Einsatzes mit einfachen Mitteln nachgerüstet werden.

Vorzugsweise ist der Druckraum durch eine bewegliche und/oder elastische Wand von einer Kammer fluiddicht getrennt, die mit einem kompressiblen Medium gefüllt ist. Dies stellt eine relativ einfache Möglichkeit dar, ein veränderbares Volumen für den Druckraum zu erzeugen. Als kompressibles Medium kann beispielsweise ein Gas, wie Luft oder Stickstoff, verwendet werden. Es ist aber auch möglich, ein elastisches Kunststoffmaterial zu verwenden. Durch das kompressible Medium können die für die Verformung und/oder Bewegung der wanderforderlichen Kräfte beeinflusst werden, wodurch eine Einstellung auf bestimmte Frequenzen erfolgen kann, in denen eine besonders gute Dämpfung erzielt wird. Die Kammer kann ebenfalls im Einsatz ausgebildet sein, wobei die Wand einstückig mit dem Einsatz ausgebildet sein kann. Die Kammer und/oder die Wand kann aber auch als mindestens ein zusätzliches Element eingesetzt sein. Die Wand kann als Elastomermembran, aber auch als dünnes Metallband oder als Kompositband ausgebildet sein.

In einer bevorzugten Ausgestaltung ist der Druckraum ringartig ausgebildet und umgibt die Druckkammer ringartig oder es sind mehrere Druckräume vorgesehen, die jeweils als Ringsegment ausgebildet sind und die Druckkammer ringartig umgeben. Durch diese Ausbildung wird der Raumbedarf in Radialrichtung der Walze sehr gering gehalten, so dass der Durchmesser des Jochs nicht besonders groß sein muss. Es kann daher auch eine Schwingungsdämpfung bei Walzen mit relativ geringem Durchmesser erfolgen. Dabei kann vorgesehen sein, dass die Kammern jeweils weiter außen liegen als die Druckräume. Auch bei Verwendung mehrerer Druckräume kann die Länge der Kanäle relativ kurz gehalten bleiben, wobei gegebenenfalls sogar alle Kanäle gleich lang sind. Dadurch wird ein sehr dynamisches System erhalten.

Vorzugsweise sind mehrere Druckräume in Radialrichtung der Walze nebeneinander angeordnet. Bei sehr kurzer und damit kleiner Bauweise kann damit ein effektiv arbeitender Dämpfer erhalten werden. Wenn die Druckräume zumindest teilweise unterschiedlich dimensioniert sind, und/oder die Eigenschaften der Wand bzw. des kompressiblen Mediums unterschiedlich sind, kann eine Abstimmung auf unterschiedliche Frequenzen erfolgen. Insgesamt kann damit ein sehr breites Frequenzband sehr effektiv gedämpft werden.

Vorzugsweise ist die Wand aller Druckräume einstückig durch einen flexiblen Schlauch gebildet. Durch den Schlauch erfolgt damit eine sehr sichere Abdichtung zwischen Druckraum und Kammer. Der Schlauch kann dabei in verschiedenen Druckräumen unterschiedlich vorgespannt sein, so dass die Dämpfungseigenschaften des Systems beeinflussbar sind.

Vorzugsweise weist die Kammer einen Druckanschluss auf oder ist hermetisch dicht ausgebildet. Bei beiden Lösungen kann ein Gas wie beispielsweise Luft oder Stickstoff als kompressibles Medium verwendet werden. Wenn die Kammer einen Druckanschluss aufweist, ist auch eine nachträgliche Anpassung der Dämpfungseigenschaften möglich. Eine hermetisch dichte Ausbildung hat dagegen den Vorteil, dass ein nahezu wartungsfreier Betrieb möglich ist.

In einer bevorzugten Ausführungsform ist eine Anzahl und/oder eine Querschnittsfläche und/oder eine Länge der Kanäle und/oder der Drosselstelle mit mindestens einem Stellelement veränderbar, das insbesondere als hydraulisches, elektrisches, magnetisches oder piezoelektrisches Stellelement ausgebildet ist. Dadurch ist es möglich, das System nachträglich auf einzelne Frequenzen abzustimmen. Es ist auch möglich, über einen bestimmten Zeitraum ein erstes Frequenzband zu dämpfen und in einem späteren Zeitraum ein weiteres Frequenzband. Insgesamt kann die Dämpfung maximiert werden, so dass sich letztlich die Standzeit der Walze verlängert.

Dabei ist besonders bevorzugt, dass mindestens ein Schwingungssensor am Walzenmantel und/oder am Joch und/oder in der Druckkammer angeordnet ist. Mit Hilfe dieses Schwingungssensors lässt sich die Schwingung des Walzenmantels direkt ermitteln und beispielsweise zur Ansteuerung des Stellelements verwendet werden. Dadurch ist eine Maximierung der Dämpfung möglich.

Vorzugsweise ist an der Wand ein Aktuator, insbesondere ein piezoelektrisches Element vorgesehen. Durch den Aktuator kann die Wand gezielt in Schwingungen versetzt werden, die den durch den Walzenmantel erzeugten Schwingungen entgegen gesetzt ist. Dadurch ist also eine aktive Schwingungsdämpfung möglich. Es ist auch möglich, durch den Aktuator die Steifigkeit der Wand zu beeinflussen, wodurch Einfluss auf das Dämpfungsverhalten genommen werden kann.

Die Aufgabe wird durch ein Verfahren der eingangs genannten Art dadurch gelöst, dass eine Dimensionierung der Druckräume, der Kanäle, der

Drosselstelle und der Kammern in Abhängigkeit von mindestens einer Schwingfrequenz des Walzenmantels erfolgt.

Dadurch kann eine effektive Schwingungsdämpfung in einem mittleren Frequenzbereich sichergestellt werden. Bei mehreren Druckräumen kann die Dämpfung auch über ein sehr breites Frequenzband erfolgen.

Dabei ist besonders bevorzugt, dass unterschiedliche Druckräume und/oder Kammern auf unterschiedliche Frequenzen abgestimmt werden. Insgesamt kann damit eine Dämpfung über ein sehr breites Frequenzband erfolgen.

Vorzugsweise werden Schwingungen der Walze über Sensoren erfasst und eine Anzahl, Länge und/oder Querschnittsfläche der Kanäle und/oder der Drosselstelle in Abhängigkeit von den Schwingungen verändert. Es erfolgt also eine aktive Regelung der Schwingungsdämpfung. Dadurch kann die Dämpfung der Schwingungen maximiert werden, so dass die Standzeit der Walze verlängert wird.

Vorzugsweise wird mit einem Aktuator eine Schwingung in die Wand eingebracht. Es erfolgt also nicht nur eine passive Schwingungsdämpfung, sondern auch eine aktive Schwingungsdämpfung durch das Einbringen von Schwingungen mit Hilfe eines Aktuators. Die Schwingungsdämpfung ist dann nicht mehr ausschließlich auf die entsprechend abgestimmten Frequenzen beschränkt, sondern es können auch weitere Frequenzen gedämpft werden. Insgesamt lässt sich die Dämpfung so maximieren.

Die Erfindung wird im Folgenden anhand eines bevorzugten Ausführungsbeispiels in Verbindung mit der Zeichnung beschrieben. Hierin zeigen:
- Fig. 1: einen Querschnitt durch ein Joch und
- Fig. 2: eine Detailzeichnung des Druckraums mit Kammer.

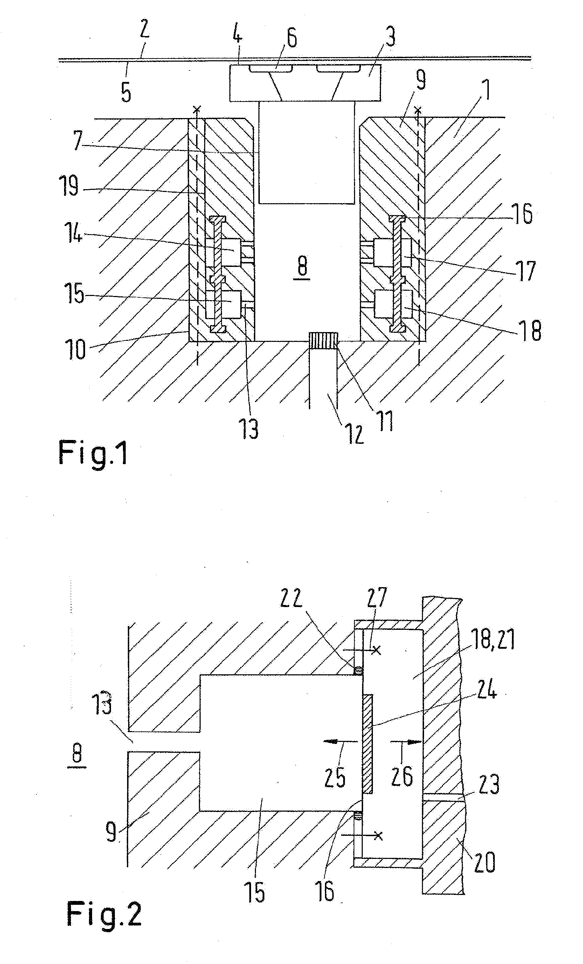

Fig. 1 zeigt im Querschnitt eine Walze mit einem feststehenden Joch 1 und einem umlaufenden Walzenmantel 2. Das Joch 1 durchsetzt dabei den Walzenmantel 2 axial, in der Darstellung gem. Fig. 1 also von links nach rechts. Der Walzenmantel 2 wird mit Hilfe eines Stützelements 3 radial nach außen gedrückt. Das Stützelement 3 liegt dafür mit einer Anlegeseite 4 an einer Innenseite 5 des Walzenmantels 2 an. Das Stützelement 3 weist an seiner Anlegeseite 4 Drucktaschen 6 auf, in denen Öl zur Ausbildung eines Ölfilms zwischen der Anlegeseite 4 und der Innenseite 5 aufgenommen ist.

Das Stützelement 3 ist mit einem zylindrischen Fortsatz 7 in einer Druckkammer 8 radial beweglich geführt. Die Druckkammer 8 ist in einem Einsatz 9 ausgebildet, der in einer Ausnehmung 10 im Joch 1 aufgenommen ist. Über eine Drosselstelle 11 ist die Druckkammer 8 mit einer Druckmittelleitung 12 verbunden, die durch das Joch 1 nach außen geführt ist und dazu dient, die Druckkammer 8 mit einem unter Druck stehenden Druckmittel zu versorgen.

Durch den Druck in der Druckkammer 8 wird die Lage des Stützelements 3 bzgl. des Jochs 1 festgelegt. Durch Erhöhen des Drucks in der Druckkammer 8 wird das Stützelement 3 radial nach außen gedrückt und drückt so gegen den Walzenmantel 2. Bei einer Verringerung des Drucks in der Druckkammer 8 wird das Stützelement 3 durch die Elastizität des Walzenmantels 2 bzw. durch eine Gegenwalze, die auf den Walzenmantel 2 drückt, radial nach innen bewegt. Zwischen dem Fortsatz 7 des Stützelements 3 und einer Begrenzung der Druckkammer 8 kann gegebenenfalls eine Dichtung, insbesondere eine Ringdichtung vorgesehen sein.

Von Begrenzungswänden der Druckkammer 8 gehen Kanäle 13 ab, die die Druckkammer 8 mit Druckräumen 14, 15 verbinden. Die Druckräume 14, 15 sind in diesem Beispiel ringartig ausgebildet und umgeben die Druckkammer 8 ringförmig. Dabei sind die Druckräume 14, 15 in Radialrichtung der Walze nebeneinander angeordnet.

Jeder der Druckräume 14, 15 ist durch eine elastische Wand von jeweils einer Kammer 17, 18 getrennt. Die Kammern 17, 18 sind bei diesem Beispiel ebenfalls ringförmig ausgebildet und umgeben die Druckräume 14, 15. Die Wand 16 ist als elastischer Schlauch ausgebildet, der zwischen allen Druckräumen und Kammern als Wand dient.

Durch die Anzahl und Dimensionierung der Kanäle 13 je Druckraum können die Druckräume auf relativ einfache Weise an unterschiedliche Frequenzen angepasst werden. So ist der Druckraum 14 über die doppelte Anzahl an Kanälen mit der Druckkammer 8 verbunden als der Druckraum 15. Aber auch andere Verhältnisse sind denkbar.

Bei der in Fig. 1 gezeigten Ausführungsform sind die Druckräume 14, 15 und die jeweils dazugehörigen Kammern 17, 18 jeweils ringförmig ausgebildet. Es ist auch möglich, die Druckräume und die jeweils dazugehörige Kammer als Teil eines Ringsegments anzuordnen, so dass auf gleicher radialer Höhe bzgl der Walze mehrere Druckräume liegen können, die unterschiedlich oder gleich ausgebildet sein können. Die Wand 16 muss auch nicht unbedingt als durchgehender Schlauch ausgebildet sein, sondern es kann auch jeder Druckraum 14, 15 eine eigene Wand aufweisen.

Die Kammern 17, 18 sind mit einem kompressiblen Medium gefüllt. Im vorliegenden Ausführungsbeispiel sind die Kammern 17, 18 über eine Versorgungsleitung 19 mit einem gasförmigen Medium befüllbar. Dadurch kann der Druck in der Kammer 17, 18 individuell eingestellt werden, wodurch eine Anpassung an verschiedene Schwingungsfrequenzen möglich ist.

Die Druckkammer 8 mit den Druckräumen 14, 15, den Kammern 17, 18, der Wand 16 und den Kanälen 13 sind in dem Einsatz 13 eingeformt. Für eine Befestigung des Einsatzes 13 im Joch 9 können gängige Befestigungsmittel verwendet werden.

Bei einer Schwingung des Walzenmantels 2 relativ zum Joch 1 wird das steif an den Walzenmantel 2 angekoppelte Stützelement 3 ebenfalls in Schwingungen versetzt und bewegt sich radial bzgl. des Jochs 1 in der Druckkammer 8. Dadurch wird das in der Druckkammer 8 befindliche Druckmittel über die Drosselstelle 11 hin- und hergeschoben. In der Drosselstelle 11 wird dem System durch Reibung Energie entzogen. Dadurch erfolgt eine Schwingungsdämpfung. Die Größe der Drosselstelle 11 hat dabei großen Einfluss darauf, bei welcher Frequenz eine wirksame Schwingungsdämpfung erfolgt. Ist die Drosselstelle 11 zu klein, kann nur wenig Öl die Drosselstelle passieren, so dass das Druckmittel innerhalb der Druckkammer als Feder wirkt, wobei die Drosselstelle nur eine geringe Dämpfungswirkung hat. Wenn die Drosselstelle zu weit ist, ist auch der durch sie hervorgerufene Strömungswiderstand gering, so dass nur eine geringe Dämpfung erzielbar ist. Alleine über die Drosselstelle 11 ist daher keine effektive Dämpfung zu erreichen.

Eine Verbesserung der Schwingungsdämpfung wird mit Hilfe der zusätzlichen Druckräume 14, 15 erreicht, die durch eine elastische Wand 16 von Kammern 17, 18 getrennt sind. Die Druckräume 14, 15 weisen durch die elastische Verformung der Wand ein veränderbares Volumen auf. Die Druckräume 14, 15 sind untereinander hermetisch dicht voneinander getrennt, wobei jedoch eine Verbindung über die Kanäle 13 und die Druckkammer 8 vorhanden ist. Jede der Druckräume 14,15 mit den entsprechenden Kammern 17, 18 und den Wänden 16 kann daher individuell auf eine bestimmte Frequenz abgestimmt werden.

Die Druckräume 14, 15 wirken zusammen mit den Kammern 17, 18 und den Kanälen 13 als "Helmholtz-Resonator", mit dem die Schwingungen des Walzenmantels 2 bzw. die Druckpulsationen des Druckmittels, das in der Druckkammer 8 angeordnet ist, wirksam gedämpft werden können. Das Druckmittel, das sich in den Kanälen 13 und den Druckräumen 14, 15 befindet, definiert dabei die Masse des schwingenden Systems. Eine Federelastizität definiert sich durch eine Kombination der Elastizität der Wand 16 sowie der Kompressibilität des in der Kammer 17, 18 angeordneten Mediums. Die Druckräume 14, 15 mit den Kammern 17, 18 der elastischen Wand 16 und den Kanälen 13 bildet also einen Pulsationsdämpfer, wobei durch ein Abstimmen der Kenndaten des Druckraumvolumens, der Wand sowie der Konfiguration und Dimensionierung der Kanäle 13 eine Abstimmung auf eine bestimmte Frequenz erfolgen kann. Bei mehreren Druckräumen 14, 15 ist damit eine Abstimmung über ein breites Frequenzband möglich. Die Dämpfungseigenschaften können zusätzlich noch durch die Vorspannung der Wand bzw. durch die Dicke der Wand beeinflusst werden, sowie auch durch einen Druck in der Kammer.

In Fig. 2 ist in einer vergrößerten Schnittdarstellung ein Druckraum 15 mit einem Kanal 13 und einer Kammer 18 dargestellt, wobei zwischen dem Druckraum 15 und der Kammer 18 eine elastische Wand 16 angeordnet ist. Der Kanal 13 mündet dabei in einer Begrenzungswand der Druckkammer 8. Der Druckraum 15 steht also über dem Kanal 13 direkt mit der Druckkammer 8 in Verbindung.

Der Druckraum 15 ist in dem Einsatz 9 ausgebildet, der eine Ausnehmung aufweist, in die ein Zusatzelement 20 eingesetzt ist. Das Zusatzelement 20 weist einen Hohlraum 21 auf, der die Kammer 18 bildet. Der Hohlraum 21 weist an der dem Druckraum 15 zugewandten Seite des Zusatzelements 20 die Wand 16 auf, die bei diesem Ausführungsbeispiel durch ein Metallband gebildet ist. Die Wand 16 trennt also die Kammer 18 vom Druckraum 15. Zwischen dem Zusatzelement 20 und dem Einsatz 9 ist dabei mindestens eine Dichtung 22 angeordnet.

In einer vom Druckraum abgewandten Seite weist das Zusatzelement 20 einen Anschluss 23 auf, durch den ein kompressibles Medium in den Hohlraum 21 bzw. die Kammer 18 eingebracht werden kann. Dadurch wird die Schwingfähigkeit der Wand 16 beeinflusst. Das Zusatzelement ist mit Hilfe von nur symbolisch dargestellten Befestigungsmitteln 27 im Einsatz 9 befestigt.

Auf der Wand 16 ist ein als Piezokeramik ausgebildeter Aktuator 24 angebracht, der dazu dient, die Wand 16 in Schwingungen zu versetzen, deren Richtung durch Pfeile 25, 26 gekennzeichnet sind. Neben dem aktiven Einbringen einer Schwingung kann der Aktuator 24 aber auch dazu benutzt werden, die Steifigkeit der Wand 16 zu beeinflussen.

Durch den Aktuator 24 kann also das Volumen der Kammer 18 bzw. des Druckraums 15 aktiv verändert werden. Dadurch kann der Pulsationsdämpfer, der durch die Druckräume, die Kanäle, die Wände und die Kammern gebildet wird, gezielt beeinflusst werden und auf die gewünschte Frequenz abgestimmt werden. Über Messsensoren kann dabei die Schwingung des Walzenmantels bzw. des Stützelements oder auch die Druckveränderungen in der Druckkammer 8 gemessen werden, wobei diese zur Abstimmung des Pulsationsdämpfers verwendet werden.

Dabei kann gegebenenfalls zusätzlich vorgesehen werden, dass die Größe der Drosselstelle 11, also ihr freier Querschnitt, mit Hilfe eines Stellelements beeinflusst wird. Mit weiteren Stellelementen kann dafür gesorgt werden, dass einzelne Kanäle verschlossen werden, so dass darüber die Dämpfungseigenschaften beeinflussbar sind. Die Bewegung der Stellelemente kann dabei in Abhängigkeit der jeweils direkt gemessenen Schwingungen erfolgen. Auch eine Ansteuerung der Stellelemente von außen kann möglich sein.

Jeder Druckraum bildet mit einer Kammer, einem Kanal und einer Wand zwischen der Kammer und dem Druckraum jeweils einen Pulsationsdämpfer, der auf eine bestimmte Frequenz abgestimmt werden kann. Durch das Vorsehen mehrerer derartiger Pulsationsdämpfer, die jeweils auf eine bestimmte Frequenz abgestimmt sind, kann dabei eine Dämpfung über ein sehr breites Frequenzband erfolgen. Durch die Anordnung der Pulsationsdämpfer ringförmig um die Druckkammer kann dabei mit sehr wenig Bauraum ausgekommen werden. Dabei können die Pulsationsdämpfer in einen Einsatz integriert werden, wodurch beispielsweise eine leichte Nachrüstung von Walzen möglich ist.

## Patentansprüche

1. Walze, insbesondere für eine Papier- oder Kartonmaschine, mit einem umlaufenden Walzenmantel und einem feststehenden Joch, das den Walzenmantel axial durchsetzt, wobei der Walzenmantel durch den Druck in mindestens einer Druckkammer radial nach außen belastbar ist und die Druckkammer über eine Drosselstelle mit einer Druckmittelleitung verbunden ist, **dadurch gekennzeichnet, dass** die Druckkammer (8) über mindestens einen Kanal (13) mit mindestens einem Druckraum (14, 15) verbunden ist, der ein veränderbares Volumen aufweist.

2. Walze nach Anspruch 1, **dadurch gekennzeichnet, dass** die Druckkammer (8) im Joch (1) angeordnet ist, wobei in der Druckkammer (8) ein Stützelement (3) geführt ist, das durch einen Druck in der Druckkammer (8) mit einer Anlegeseite (4) gegen den Walzenmantel (2) drückbar ist.

3. Walze nach einem der Ansprüche 1 oder 2, **dadurch gekennzeichnet, dass** die Druckkammer (8), der Kanal (13) und der Druckraum (14, 15) in einem Einsatz (9) ausgebildet sind, der in einer Ausnehmung (10) im Joch (1) angeordnet ist.

4. Walze nach einem der Ansprüche 1 bis 3, **dadurch gekennzeichnet, dass** der Druckraum (14, 15) durch eine bewegliche und/oder elastische Wand (16) von einer Kammer (17, 18) fluiddicht getrennt ist, die mit einem kompressiblen Medium gefüllt ist.

5. Walze nach einem der Ansprüche 1 bis 4, **dadurch gekennzeichnet, dass** der Druckraum (14, 15) ringartig ausgebildet ist und die Druckkammer (8) ringartig umgibt oder dass mehrere Druckräume (14, 15) vorgesehen sind, die jeweils als Ringsegment ausgebildet sind und die Druckkammer (8) ringartig umgeben.

6. Walze nach einem der Ansprüche 1 bis 5, **dadurch gekennzeichnet, dass** mehrere Druckräume (14, 15) in Radialrichtung der Walze nebeneinander angeordnet sind.

7. Walze nach einem der Ansprüche 1 bis 6, **dadurch gekennzeichnet, dass** die Wand (16) aller Druckräume (14, 15) einstückig durch einen flexiblen Schlauch gebildet ist.

8. Walze nach einem der Ansprüche 1 bis 7, **dadurch gekennzeichnet, dass** die Kammer (17, 18) einen Anschluss (23) aufweist oder hermetisch dicht ausgebildet ist.

9. Walze nach einem der Ansprüche 1 bis 8, **dadurch gekennzeichnet, dass** eine Anzahl und/oder eine Querschnittsfläche und/oder eine Länge der Kanäle (13) und/oder der Drosselstelle (11) mit mindestens einem Stellelement veränderbar ist, das insbesondere als hydraulisches, elektrisches, magnetisches oder piezoelektrisches Stellelement ausgebildet ist.

10. Walze nach einem der Ansprüche 1 bis 9, **dadurch gekennzeichnet, dass** mindestens ein Schwingungssensor am Walzenmantel (2) und/oder am Joch (1) und/oder in der Druckkammer (8) angeordnet ist.

11. Walze nach einem der Ansprüche 1 bis 10, **dadurch gekennzeichnet, dass** an der Wand (16) ein Aktuator (24), insbesondere ein piezoelektrisches Element vorgesehen ist.

12. Verfahren zum Dämpfen von Schwingungen einer Walze gemäß einem der Ansprüche 1 bis 11, **dadurch gekennzeichnet, dass** eine Dimensionierung der Druckräume, der Kanäle, der Drosselstelle und der Kammern in Abhängigkeit von mindestens einer Schwingfrequenz des Walzenmantels erfolgt.

13. Verfahren nach Anspruch 12, **dadurch gekennzeichnet, dass** unterschiedliche Druckräume und/oder Kammern auf unterschiedliche Frequenzen abgestimmt werden.

14. Verfahren nach einem der Ansprüche 12 oder 13, **dadurch gekennzeichnet, dass** Schwingungen der Walze über Sensoren erfasst werden und eine Anzahl, Menge und/oder Querschnittsfläche der Kanäle und/oder der Drosselstelle in Abhängigkeit von den Schwingungen verändert werden.

15. Verfahren nach einem der Ansprüche 12 bis 14, **dadurch gekennzeichnet, dass** mit einem Aktuator eine Schwingung in die Wand eingebracht wird.
